Europäisches Patentamt

European Patent Office

Office européen des brevets

(19)

(11) Veröffentlichungsnummer: **0 346 696**
**A1**

(12) **EUROPÄISCHE PATENTANMELDUNG**

(21) Anmeldenummer: **89109951.7**

(22) Anmeldetag: **01.06.89**

(51) Int. Cl.⁴: **A47C 27/04 , A47C 31/10**

(30) Priorität: **13.06.88 DE 3820095**

(43) Veröffentlichungstag der Anmeldung:
**20.12.89 Patentblatt 89/51**

(84) Benannte Vertragsstaaten:
**AT BE CH DE ES FR GB GR IT LI LU NL SE**

(71) Anmelder: **W.L. Gore & Associates GmbH**
**Hermann-Oberth-Strasse 22**
**D-8011 Putzbrunn(DE)**

(72) Erfinder: **Hübner, Thorger**
**Breitensteinstrasse 28**
**D-8208 Kolbermoor(DE)**
Erfinder: **Bleimhofer, Walter**
**Barbarastrasse 35**
**D-8122 Penzberg(DE)**

(74) Vertreter: **Klunker . Schmitt-Nilson . Hirsch**
**Winzererstrasse 106**
**D-8000 München 40(DE)**

(54) **Bezugsmaterial für gepolsterte Liegen und Sitze.**

(57) Bezugsmaterial für gepolsterte Sitze mit luftundurchlässigem Obermaterial (33), das zwischen Obermaterial (33) und einem Oberstoff (35) ein Ventilationsschichtmaterial (3) mit Längsluftleitfähigkeit und damit in Verbindung stehende Querluftleitfähigkeit aufweist.

FIG. 3

EP 0 346 696 A1

## Bezugsmaterial für gepolsterte Liegen und Sitze

Die Erfindung macht Bezugsmaterial für Liegen oder Sitze mit einem flächigen, flexiblen, druckstabilen Ventilationsschichtmaterial gemäß Anspruch 1 verfügbar.

Mit dem Begriff Liege sollen hier auch Betten mit umfaßt sein.

Man kommt häufig mit atmungsinaktiven oder atmungsschwachen Materialien direkt oder indirekt in Berührung, was an der entsprechenden Körperstelle zur Bildung von Schweißfeuchtigkeit führt.

Als Beispiel seien Fahrzeugsitze betrachtet, die sehr häufig mit luftundurchlässigem oder nicht genügend luftdurchlässigem Obermaterial versehen sind, so daß man auf solchen Sitzen, insbesondere bei höheren Sommertemperaturen, häufig im Bereich des Rückens und der Unterseite der Oberschenkel schweißfeucht wird.

In solchen Fällen kann Abhilfe mit dem erfindungsgemäß eingesetzten Ventilationsschichtmaterial geschaffen werden. Dadurch, daß dieses Ventilationsschichtmaterial in Längsrichtung leitende Luftkanäle und damit in Verbindung stehende und in Querrichtung bis zu mindestens einer seiner Oberflächen reichende Luftkanäle aufweist, kann Luft an alle mit dem Ventilationsschichtmaterial unterlegten Bereiche herankommen. Dadurch kann Schwitzfeuchtigkeit verdunsten und abgeführt werden. Die Ventilationswirkung wird häufig dadurch erhöht, daß der mit dem Ventilationsschichtmaterial versehene Sitz während seiner Benutzung häufig bewegt wird, was in dem Ventilationsschichtmaterial zu einer Pumpwirkung führt, durch welche das Ventilationsverhalten erhöht wird.

Die Ausrichtung des Ventilationsschichtmaterials ist zweckmäßigerweise derart, daß die Längsluftleitkanäle zu mindestens einem Seitenrand des Sitzes gerichtet sind, während die Querluftleitkanäle zum Körper des Benutzers des Sitzes hin gerichtet sind.

Das Ventilationsschichtmaterial kann gänzlich verschieden strukturiert sein, beispielsweise offenporig, rippenartig, genoppt, mit Stegen versehen, netzartig dreidimensional oder dergleichen. Wichtig ist nur, daß dabei Längsluftleitkanäle und mit diesen in Verbindung stehende Querluftleitkanäle bis zu mindestens einer Oberfläche hin entstehen.

Anwendungsmöglichkeiten des erfindungsgemäßen Ventilationsschichtmaterials sind insbesondere Fahrzeugsitze, Sitzmöbel, Sitzbezüge. Die Sitzbezüge können fest mit dem Sitz verbunden oder nachträglich auf den Sitz aufstülpbare Sitzbezüge sein. Bei geschäumten Sitzpolstern kann auch das Ventilationsschichtmaterial in die Polsteroberfläche eingearbeitet sein.

Neben der Ventilationswirkung hat das erfindungsgemäß verwendete Ventilationsschichtmaterial noch weitere Vorteile. Ein solcher Vorteil ist die Polsterwirkung, die beispielsweise im Fall relativ harter Sitze sehr angenehm sein kann. Ein anderer Vorteil ist die Erzielung einer flexiblen Versteifung zur Verhinderung von Lappigkeit beispielsweise eines aufstülpbaren Sitzbezuges, der dann besser seine gewünschte Lage einhält und nicht so leicht vom Sitz wegrutscht.

Das Ventilationsschichtmaterial soll in gewissem Umfang druckstabil sein. Das heißt, es soll bei der Druckbelastung, die bei normaler Verwendung des mit dem Ventilationsschichtmaterial versehenen Sitzes auftritt, seine Ventilationsfunktion nicht verlieren. Das heißt, bei einem solchen Normalbelastungsdruck sollen die Luftkanäle noch soweit ihre Form bewahren, daß sie noch ausreichend Ventilationsluft leiten können.

Das Ventilationsschichtmaterial kann aus geeignetem Kunststoff hergestellt sein.

Beispiele hierfür sind Polyamid, Polypropylen und Polyester, in Monofilamentform oder in Multifilamentform, gewebt oder geraschelt, oder auch in Form von retikuliertem Schaumstoff aus derartigem Material.

Die Verwendung von Ventilationsschichtmaterial ist auch bei Liegen und Betten, insbesondere Krankenbetten für Lang-oder Dauerliegepatienten von großem Vorteil. Die Ventilationswirkung, welche zur Abfuhr von Schwitzfeuchtigkeit führt, reduziert in beträchtlichem Maß die Gefahr des Wundliegens des Patienten.

Vorteilhafte Weiterbildungen der Erfindung sind in den Ansprüchen 2 bis 13 angegeben.

Die Erfindung wird nun anhand von Ausführungsformen näher erläutert. In den Zeichnungen zeigen:

Fig. 1 eine Ausführungsform eines erfindungsgemäß verwendbaren Ventilationsschichtmaterials;

Fig. 2 einen Ausschnitt aus einer schematischen Darstellung eines Bezugsmaterials für einen gepolsterten Sitz, der erfindungsgemäß mit Ventilationsschichtmaterial versehen ist.

Fig. 3 eine Schnittansicht des Aufbaus eines Sitzes.

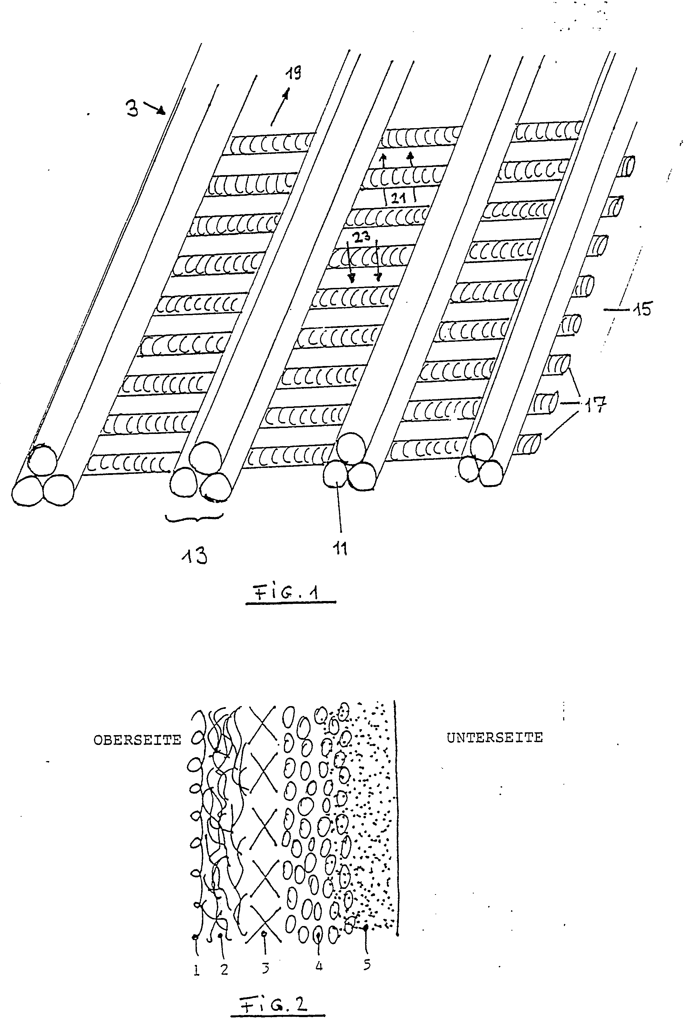

In Fig. 1 ist in schematischer, stark vergrößerter Weise ein Ausführungsbeispiel für ein erfindungsgemäß verwendbares Ventilationsschichtmaterial dargestellt. Dabei bilden je drei deltaförmig gebündelte Längsstege 13 einen Abstandshalter 11. Eine Vielzahl im wesentlichen parallel und mit Abstand voneinander angeordneter Abstandshalter 11 ist auf ihrer Unterseite mittels einer Vielzahl von bezüglich der Abstandshalter 11 quer verlaufenden, im Abstand voneinander angeordneten und im wesentlichen parallel zueinander verlaufenden Querstegen 17 verbunden. Die Zwischenräume zwischen je zwei benachbarten Abstandshaltern 11 bilden Längsluftleitkanäle 19. Damit in Verbindung stehen Querluftleitkanäle 21, 23, wobei die Querluftleitkanäle 23 ebenfalls durch die Zwischenräume zwischen den Abstandshaltern 11 gebildet sind und durch die Längsluftleitkanäle 19 strömende Luft zu der in Fig. 1 oberhalb der Abstandshalter 11 befindlichen Ebene leiten. Die Querluftleitkanäle 21 sind durch die Zwischenräume zwischen den Querstegen 17 gebildet und leiten durch die Längsluftleitkanäle 19 strö mende Luft zu der in Fig. 1 unteren Seite des Ventilationsschichtmaterials. Feuchtigkeit, die sich unterhalb oder oberhalb des Ventilationsschichtmaterials bildet, kann über die Querluftleitkanäle 21 oder 23 und die Längsluftleitkanäle 19 abgeführt werden.

Fig. 2 zeigt ein Anwendungsbeispiel für ein erfindungsgemäß eingesetztes Ventilationsschichtmaterial. Gezeigt ist in schematischer, vergrößerter Darstellung ein Querschnittsausschnitt eines geschäumten Sitzpolsters mit Ventilationskonstruktion. Von der Oberseite zur Unterseite hin betrachtet kommt als erstes eine Schicht aus einer Wirkware, wobei es sich vorzugsweise um ein textiles Futter handeln kann. Die Wirkwarenschicht 1 befindet sich auf einer Isolationsmaterialschicht 2. Diese wiederum ist auf einer Schicht 3 aus Ventilationsschichtmaterial aufgebracht. Dieses befindet sich auf einer Dämpfungsmaterialschicht 4, die ihrerseits auf einer Schicht 5 angeordnet ist, welche die Innenschicht des geschäumten Sitzpolsters bildet.

Die Schicht 5 ist luftundurchlässig. Auch die Dämpfungsmaterialschicht 4, die Stöße abmildern soll, ist nicht oder nur sehr geringfügig luftdurchlässig. Die Isolationsmaterialschicht 2 dient hauptsächlich der Wärmeisolation und kann beispielsweise durch eine Wattierung gebildet sein.

Körperfeuchtigkeit, die in die Wirkwarenschicht 1 und die Isolationsmaterialschicht 2 eindringt, könnte ohne das Vorhandensein der Schicht 3 aus Ventilationsschichtmaterial nicht abgeführt werden, sondern würde sich in den Schichten 1 und 2 sammeln, die dadurch feucht werden, was zu einem unangenehmen Feuchtwerden des Körpers der den Sitz benutzenden Person führt. Durch die Ventilationswirkung der Schicht 3 aus Ventilationsschichtmaterial wird an den Schichten 1 und 2 Luft vorbeigeführt, mit welcher die Feuchtigkeit abgeführt werden kann. Auf diese Weise kann die Körperfeuchtigkeit vom Körper weggeführt werden, so daß das Sitzgefühl auf dem Sitzpolster wesentlich verbessert wird.

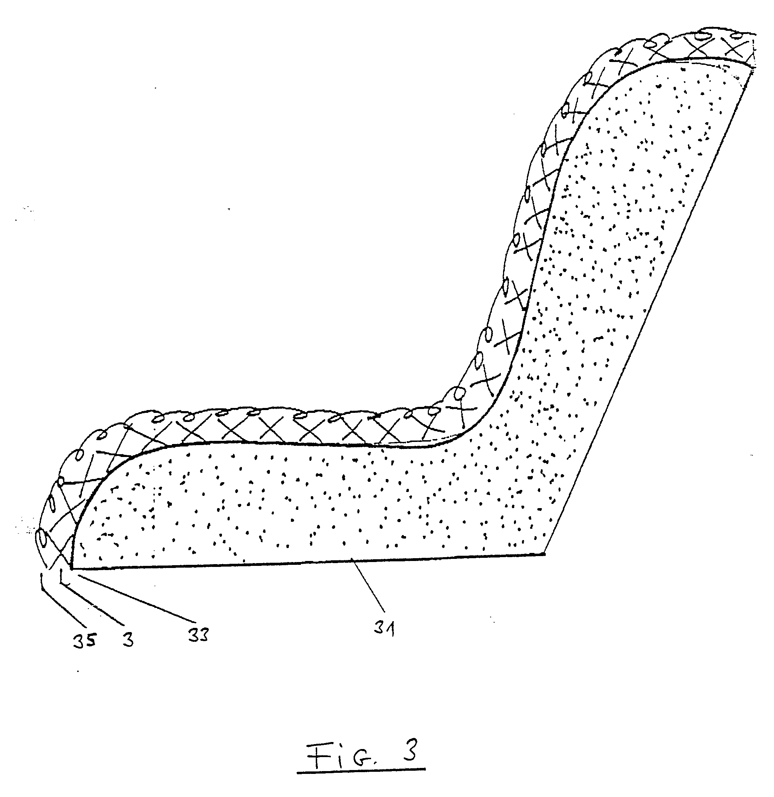

Fig. 3 zeigt in Schnittansicht den Aufbau eines Sitzes, beispielsweise Kraftfahrzeugsitzes. Dieser umfaßt einen geschäumten Kern 31, der mit einer Folie 33 abgeschlossen ist. Auf der Folie befindet sich ein Ventilationsschichtmaterial 3, das derart orientiert ist, daß die Längsluftleitkanäle zum unteren und oberen und/oder zu den seitlichen Sitzrändern führen, während die damit in Verbindung stehenden Querluftleitkanäle zum Körper eines Sitzbenutzers hin gerichtet sind. Auf dem Ventilationsschichtmaterial 3 befindet sich ein luftdurchlässiger Oberstoff.

## Ansprüche

1. Bezugsmaterial für gepolstere Liegen und Sitze, insbesondere Fahrzeugsitze, mit luftundurchlässigem oder nur schwach luftdurchlässigem Obermaterial, **dadurch gekennzeichnet,** daß das Bezugsmaterial mit flächigem, flexiblem, druckstabilem Ventilationsschichtmaterial (3) versehen ist, das Längsluftleitfähigkeit in Längserstreckungsrichtung und damit in Verbindung stehende Querluftleitfähigkeit zu mindestens einer seiner Oberflächen aufweist und das derart druckstabil ist, daß die Längsluftleitfähigkeit und die damit in Verbindung stehende Querluftleitfähigkeit bei Normaldruckbelastungen, die beim normalen Gebrauch der mit dem Ventilationsschichtmaterial (3) versehenen Bezugsmaterial versehenen Sitze auftreten, aufrechterhalten bleiben.

2. Bezugsmaterial nach Anspruch 1, **dadurch gekennzeichnet,** daß Querluftleitfähigkeit zu den beiden Oberflächen des Ventilationsschichtmaterials (3) besteht.

3. Bezugsmaterial nach Anspruch 1 oder 2, **dadurch gekennzeichnet,** daß die Längsluftleitfähigkeit durch Längsluftleitkanäle (19) und die Querluftleitfähigkeit durch Querluftleitkanäle (21, 23) bewirkt wird.

4. Bezugsmaterial nach einem der Ansprüche 1 bis 3, **dadurch gekennzeichnet,** daß das Ventilationsschichtmaterial (3) eine porige Struktur mit sowohl in Querrichtung als auch in Längsrichtung offenen Poren aufweist.

5. Bezugsmaterial nach einem der Ansprüche 1 bis 3, **dadurch gekennzeichnet,** daß das Ventilationsschichtmaterial (3) eine rippenartige Struktur mit im wesentlichen parallelen Rippen auf mindestens einer Oberfläche aufweist.

6. Bezugsmaterial nach einem der Ansprüche 1 bis 3, **dadurch gekennzeichnet,** daß das Ventilationsschichtmaterial (3) mindestens auf einer Oberfläche mit im wesentlichen parallelen Stegen (13 und/oder 17) versehen ist.

7. Bezugsmaterial nach einem der Ansprüche 1 bis 3, **dadurch gekennzeichnet,** daß das Ventilationsschichtmaterial (3) eine genoppte Struktur mit Noppen auf mindestens einer Oberfläche aufweist.

8. Bezugsmaterial nach einem der Ansprüche 1 bis 3, **dadurch gekennzeichnet,** daß das Ventilationsschichtmaterial (3) als dreidimensionales Netzmaterial ausgebildet ist.

9. Bezugsmaterial nach einem der Ansprüche 1 bis 8, **dadurch gekennzeichnet,** daß von der Gesamtdicke des Ventilationsschichtmaterials (3) ein Anteil im Bereich von etwa 10 - 90 %, vorzugsweise von etwa 60 -80 %, für den Luftleitfähigkeitsquerschnitt vorgesehen ist.

10. Bezugsmaterial nach einem der Ansprüche 1 bis 9, **dadurch gekennzeichnet,** daß das Ventilationsschichtmaterial (3) bei der Normal-Druckbelastung eine Mindestdicke von 1 mm aufweist.

11. Über eine gepolstere Liege oder einen gepolsterten Sitz, insbesondere Fahrzeugsitz, stülpbarer Bezug, **gekennzeichnet durch** ein Bezugsmaterial gemäß mindestens einem der Ansprüche 1 bis 10.

12. Gepolsterter Sitz, insbesondere Fahrzeugsitz, **dadurch gekennzeichnet,** daß der Sitz mit einem Bezugsmaterial gemäß mindestens einem der Ansprüche 1 bis 10 bezogen ist.

13. Gepolsterter Sitz, insbesondere Fahrzeugsitz, mit geschäumtem Sitzpolster, **dadurch gekennzeichnet,** daß die Oberfläche des Sitzpolsters als Ventilationsschichtmaterial entsprechend mindestens einem der Ansprüche 1 bis 10 ausgebildet ist.

14. Gepolsterte Liege, **dadurch gekennzeichnet,** daß die Liege mit einem Bezugsmaterial gemäß mindestens einem der Ansprüche 1 bis 10 bezogen ist.

15. Gepolsterte Liege, **dadurch gekennzeichnet,** daß die Oberfläche der Liege als Ventilationsschichtmaterial entsprechend mindestens einem der Ansprüche 1 bis 10 ausgebildet ist.

FIG. 1

OBERSEITE                    UNTERSEITE

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 620 862 (HITE)<br>* Spalte 1, Zeile 1 - Spalte 2, Zeile 34; Figuren 1-4 *<br>--- | 1-3,6, 11-13 | A 47 C 27/04<br>A 47 C 31/10 |
| X | GB-A-1 042 112 (CRANE)<br>* Seite 1, Zeilen 10-23; Seite 2, Zeilen 55-103 *<br>--- | 1,2,6,8 ,11-13 | |
| X | US-A-4 435 015 (TROTMAN)<br>* Spalte 1, Zeile 58 - Spalte 2, Zeile 11; Spalte 3, Zeile 56 - Spalte 4, Zeile 23; Spalte 8, Zeilen 27-42; Spalte 9, Zeilen 31-39; Figuren 1-8 *<br>----- | 1,2,7, 11-13 | |

**RECHERCHIERTE SACHGEBIETE (Int. Cl.4)**

A 47 C
B 60 N

Der vorliegende Recherchenbericht wurde für alle Patentansprüche erstellt

| Recherchenort | Abschlußdatum der Recherche | Prüfer |
|---|---|---|
| DEN HAAG | 09-08-1989 | DE COENE P.J.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.........................................................................
& : Mitglied der gleichen Patentfamilie, übereinstimmendes Dokument

EPO FORM 1503 03.82 (P0403)